# EUROPÄISCHE PATENTANMELDUNG

(11) **EP 1 408 062 A1**
(43) Veröffentlichungstag der Anmeldung: **14.04.2004**
(21) Anmeldenummer: 02022561.1
(22) Anmeldetag: 08.10.2002
(51) Int. Cl.: C08G 18/12, C08G 18/30, C08G 18/22, C09D 175/04, C09J 175/04, B01J 31/18

(54) **Bismutkatalysierte Polyurethanzusammensetzung**

(71) Anmelder: Sika Technology AG, 6340 Baar (CH)
(72) Erfinder: Burckhardt, Urs, 8057 Zürich (CH); Diener, Andreas, 8637 Laupen (CH)
(74) Vertreter: Isler, Jörg

(57) **Zusammenfassung**

Die vorliegende Erfindung betrifft eine einkomponentige Polyurethanzusammensetzung, welche mindestens ein Polyurethanprepolymer mit Isocyanatendgruppen, welches aus mindestens einem Polyisocyanat und mindestens einem Polyol hergestellt wird, sowie mindestens ein Katalysatorsystem, welches aus mindestens einer Bismutverbindung und mindestens einer aromatischen Stickstoffverbindung erhältlich ist, umfassen.

Zusätzlich betrifft die Erfindung eine Verwendung dieser Polyurethanzusammensetzung als Klebstoff, Dichtstoff, Beschichtung oder Belag.

Schliesslich werden Katalysatoren für Polyurethanzusammensetzungen offenbart, die Koordinationsverbindungen zwischen Bismut und mindestens einer aromatischen Stickstoffverbindung darstellen.

## Beschreibung

### Technisches Gebiet und Stand der Technik

Die vorliegende Erfindung betrifft das Gebiet der Polyurethanzusammensetzungen sowie Katalysatoren für Polyurethanzusammensetzungen.

Polyurethanzusammensetzungen werden seit langem in vielen Bereichen eingesetzt. Einerseits sind zweikomponentige Polyurethanzusammensetzungen bekannt, welche in der einen Komponente Isocyanate enthalten und in der zweiten Komponente eine mit Isocyanatgruppen reaktive Verbindung wie beispielsweise ein Amin. Solche Systeme zeichnen sich durch eine äusserst schnelle Aushärtung nach dem Mischen der Komponenten aus. Andererseits sind auch einkomponentige Polyurethanzusammensetzungen bekannt. Diese Polyurethanzusammensetzungen enthalten reaktive Isocyanate und härten unter dem Einfluss von Wasser aus. Das Wasser hierfür stammt normalerweise aus der Luft (Luftfeuchtigkeit). Durch die Diffusion des Wassers bedingt, erfolgt die Aushärtung dieser Zusammensetzungen nach ihrer Applikation bedeutend langsamer als bei zweikomponentigen Systemen. Dies ist speziell bei ungünstigen Applikationsbedingungen, wie etwa tiefer Temperatur oder niedriger Luftfeuchtigkeit, sehr ausgeprägt und führt dann häufig zu unvollständiger Aushärtung und damit zu geringer mechanischer Endfestigkeit der Zusammensetzung. Durch die langsame Härtungsreaktion bedingt, verfügt eine einkomponentige Zusammensetzung zudem nur über eine geringe Frühfestigkeit (die Festigkeit nach einer gewissen Zeit, vor der vollständigen Aushärtung der Zusammensetzung), was eine frühzeitige Materialbelastung, wie sie vom Anwender in vielen Fällen gewünscht wird, ausschliesst. Um dem Problem tiefer Aushärtungsgeschwindigkeit, geringer Frühfestigkeit und unvollständiger Aushärtung zu entgegnen, werden üblicherweise Katalysatoren eingesetzt. Für einkomponentige feuchtigkeitsreaktive Polyurethanzusammensetzungen geeignete Katalysatoren enthalten oft Zinnverbindungen, vielfach kombiniert mit tertiären Aminen. Solche Zinn-Katalysatoren kommen jedoch in neuerer Zeit seitens der Anwender immer mehr unter Druck wegen toxikologischer Bedenken. Deshalb besteht ein zunehmender Bedarf nach toxikologisch günstigeren Alternativen zu den Zinn-Katalysatoren.

Bismut-Katalysatoren haben eine weit geringere Akuttoxizität als die erwähnten Zinn-Katalysatoren und sind diesen aus Anwendersicht deshalb deutlich vorzuziehen. Als Bismut-Katalysatoren für Polyurethanzusammensetzungen bekannt sind beispielsweise Bismutcarboxylate, z.B. Bismut-Octoat, wie in WO 98/36007 erwähnt. Allerdings ist die katalytische Aktivität von Bismut-Verbindungen in Bezug auf die Isocyanat-Wasser-Reaktion deutlich geringer als jene von Zinn-Katalysatoren. Die für eine ausreichende Härtungsgeschwindigkeit notwendige hohe Katalysatordosis führt aber dazu, dass Polyurethanzusammensetzungen, die solche Bismutcarboxylate enthalten, nicht über die ganze Dauer der vom Anwender geforderten Haltbarkeit, meist mehrere Monate bis ein oder zwei Jahre, anwendbar bleiben, weil die Isocyanatgruppen der Zusammensetzung unter der Wirkung des Bismut-Katalysators, auch in Abwesenheit von Wasser, Reaktionen eingehen. In der Praxis zeigt sich die ungenügende Lagerstabilität einer solchen Zusammensetzung im stetig fortschreitenden Anstieg der Viskosität über die Lagerzeit, was mit der zunehmenden Verschlechterung ihrer Applikationseigenschaften, bis zum Verlust der Applizierbarkeit, einhergeht.

Bisher bekannte einkomponentige Polyurethanzusammensetzungen, welche sowohl lagerstabil sind als auch mit Wasser bzw. Luftfeuchtigkeit rasch aushärten, haben überdies oft Schwächen in bezug auf ihre Haftungseigenschaften auf Lacken, wie sie im Automobilbau eingesetzt werden und deshalb dem Fachmann als "Automobillacke" bekannt sind. Insbesondere die neuere Generation von Automobillacken lässt sich mit feuchtigkeitshärtenden einkomponentigen Polyurethanklebstoffen oft nur unzureichend bekleben. In den Fällen, wo solche Lacke mehrfach eingebrannt werden, ist es besonders schwierig, eine gute Haftung des Klebstoffs auf dem Untergrund zu erreichen und diese auch langfristig zu erhalten.

### Aufgabe und Lösung

Es war die Aufgabe dieser Erfindung, eine feuchtigkeitshärtende einkomponentige Polyurethanzusammensetzung zur Verfügung zu stellen, welche einerseits in Abwesenheit von Wasser ausreichend lagerstabil ist, und welche andererseits nach ihrer Applikation unter Gewährung einer ausreichend langen Offenzeit rasch und vollständig aushärtet sowie eine hohe Frühfestigkeit aufweist. Die Zusammensetzung sollte zusätzlich über gute Haftungseigenschaften auf Automobillacken, insbesondere mehrfach eingebrannten Automobillacken, verfügen.

Überraschenderweise wurde nun eine feuchtigkeitshärtende einkomponentige Polyurethanzusammensetzung mit den gewünschten Eigenschaften gefunden. Die beschriebene Zusammensetzung enthält ein Katalysatorsystem, welches aus einer Bismutverbindung und mindestens einer aromatischen Stickstoffverbindung besteht. Die beschriebene Zusammensetzung ist einerseits in Abwesenheit von Wasser äusserst lagerstabil und verfügt andererseits nach ihrer Applikation über hohe Frühfestigkeiten und härtet schnell und vollständig aus. Sie ist gut verarbeitbar und weist überdies sehr gute Haftungseigenschaften auf Automobillacken auf, insbesondere auch auf solchen Automobillacken, die mehrfach eingebrannt wurden. Die beschriebene Zusammensetzung ist geeignet für die Verwendung als Klebstoff, Dichtstoff, Beschichtung oder Belag.

### Ausführliche Beschreibung der Erfindung

Die vorliegende Erfindung betrifft einkomponentige Polyurethanzusammensetzungen, welche mindestens ein Polyurethanprepolymer mit Isocyanatendgruppen, welches aus mindestens einem Polyisocyanat und mindestens einem Polyol hergestellt wird, sowie mindestens ein Katalysatorsystem, welches aus mindestens einer Bismutverbindung und mindestens einer aromatischen Stickstoffverbindung erhältlich ist, umfassen.

Das Präfix ,Poly' in ,Polyol' und ,Polyisocyanat' beschreibt hierbei und im Folgenden, dass die Anzahl der jeweiligen funktionellen Gruppen pro Molekül 2 oder grösser ist.

Das Polyurethanprepolymer wird aus mindestens einem Polyol und mindestens einem Polyisocyanat hergestellt. Die Umsetzung des Polyols mit einem Polyisocyanat kann dadurch erfolgen, dass das Polyol und das Polyisocyanat mit üblichen Verfahren, beispielsweise bei Temperaturen von 50 bis 100 °C, gegebenenfalls unter Mitverwendung geeigneter Katalysatoren und/oder bei den gewählten Reaktionsbedingungen mit Isocyanaten nicht reaktiven Lösemitteln und/oder Weichmachern, zur Reaktion gebracht werden, wobei das Polyisocyanat im stöchiometrischen Überschuss eingesetzt wird. Als Reaktionsprodukt entsteht das Polyurethanprepolymer mit Isocyanatendgruppen. Der Überschuss an Polyisocyanat wird so gewählt, dass im Polyurethanprepolymer nach der Umsetzung aller Hydroxylgruppen des Polyols ein Gehalt an freien Isocyanatgruppen von 0.1 bis 15 Gewichts-%, bevorzugt 0.5 bis 5 Gewichts-%, bezogen auf das gesamte Polyurethanprepolymer, verbleibt.

Die für die Prepolymerherstellung eingesetzten Polyole sind solche, wie sie in der Polyurethanchemie üblicherweise verwendet werden. Neben Hydroxylgruppen-enthaltenden Polyacrylaten, Polyestern, Polycarbonaten und Polybutadienen von besonderem Interesse sind die Polyoxyalkylenpolyole, insbesondere Polyoxyethylenpolyole, Polyoxypropylenpolyole und Polyoxybutylenpolyole, vorzugsweise Polyoxyalkylendiole oder -triole. Das Molekulargewicht der Polyole liegt typischerweise im Bereich von 250 - 30'000 g/mol, insbesondere 500 - 15'000 g/mol. Bevorzugt werden Polyole mit einem Molekulargewicht von 800 - 6'000 g/mol eingesetzt. Unter ,Molekulargewicht' oder 'Molgewicht' versteht man hierbei und im Folgenden stets das Molekulargewichtsmittel M_{w}.

Bevorzugt als Polyole sind reine Polyoxypropylenpolyole sowie sogenannte "EO-endcapped" (ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.

Weiterhin bevorzugt als Polyole sind Polyoxyalkylenpolyole mit einem Gesamt-Ungesättigtheitsgrad von <0.04 mEq/g, bevorzugt <0.02 mEq/g und besonders bevorzugt <0.017 mEq/g. In einer bevorzugten Ausführungsform weisen solche Polyoxyalkylenpolyole ein Molekulargewicht von 2'000 bis 30'000 g/mol auf.

Bei diesen speziellen Polyoxyalkylenpolyolen handelt es sich um Umsetzungsprodukte eines Startermoleküls mit Alkylenoxiden wie 1,2-Propylenoxid oder Ethylenoxid, wobei die Alkylenoxide einzeln, alternierend nacheinander oder als Mischungen verwendet werden können. Als Polymerisationskatalysator dient üblicherweise ein sogenannter Double Metal Cyanid Komplex, kurz DMC-Katalysator genannt. Solche Polyole sind kommerziell erhältlich zum Beispiel unter den Namen Acclaim® und Arcol® der Firma Bayer, Preminol® der Firma Asahi Glass, Alcupol® der Firma Repsol sowie Poly-L® der Firma Arch Chemicals. Durch die Verwendung eines DMC-Katalysators bei ihrer Herstellung weisen sie einen sehr niedrigen Ungesättigtheitsgrad auf. Das bedeutet, dass der Gehalt dieser Polyole an Polyoxypropylenen, welche an einem Kettenende eine Doppelbindung und am anderen Kettenende eine OH-Gruppe als Endgruppen tragen (sogenannte "Monole"), sehr niedrig ist. Monole entstehen dadurch, dass Propylenoxid während der Propoxylierung zu Allylalkohol isomerisiert, was die Bildung von allyl-terminierten Polyoxypropylenen zur Folge hat. Der Grad an Ungesättigtheit wird gemessen nach ASTM D-2849-69, "Testing Urethane Foam Polyol Raw Materials", und angegeben als Milliequivalent Ungesättigtheit pro Gramm Polyol (mEq/g). Der Gesamt-Ungesättigtheitsgrad (mEq/g) dieser Polyole entspricht dem Gehalt an Monol. Aus dem mittleren Molekulargewicht (oder auch mit dem Gesamt-OH-Gehalt) und dem Gesamt-Ungesättigtheitsgrad lässt sich die mittlere OH-Funktionalität des Polyols berechnen. Es können auch Mischungen der genannten Polyole verwendet werden.

Zusätzlich zu diesen genannten Polyolen können niedrigmolekulare Verbindungen mit zwei oder mehr Hydroxylgruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, 1,1,1-Trimethylolethan, 1,1,1-Trimethylolpropan, Glycerin und Zuckeralkohole und andere höherwertige Alkohole, sowie Mischungen der vorgenannten hydroxylgruppenhaltigen Verbindungen bei der Herstellung des Polyurethanprepolymers mitverwendet werden.

Für die Herstellung des Polyurethanprepolymers werden Polyisocyanate verwendet. Bevorzugte Polyisocyanate sind Diisocyanate. Als Beispiele seien die folgenden, in der Polyurethanchemie bestens bekannten Isocyanate erwähnt:
2,4- und 2,6-Toluylendiisocyanat (TDI) und beliebige Gemische dieser Isomeren, 4,4'-Diphenylmethandiisocyanat (MDI), die stellungsisomeren Diphenylmethandiisocyanate sowie Oligomere und Polymere dieser Isocyanate, 1,3- und 1,4-Phenylendiisocyanat, 1,6-Hexamethylendiisocyanat, 2,2,4- und 2,4,4-Trimethyl-1,6-hexamethylendiisocyanat, 1,12-Dodecamethylendiisocyanat, Cyclohexan-1,3- und 1,4-diisocyanat und beliebige Gemische dieser Isomeren, 1-Isocyanato-3,3,5-trimethyl-5-isocyanatomethylcyclohexan (=Isophorondiisocyanat oder IPDI), Perhydro-2,4'- und -4,4'-Diphenylmethandiisocyanat, 1,3- und 1,4-Tetramethylxylylendiisocyanat, sowie beliebige Mischungen der vorgenannten Isocyanate.

Die Polyurethanzusammensetzung enthält weiterhin mindestens ein Katalysatorsystem, welches erhältlich ist aus mindestens einer Bismutverbindung und mindestens einer aromatischen Stickstoffverbindung.

Bei der aromatischen Stickstoffverbindung handelt es sich vorzugsweise um eine Verbindung mit der Formel A oder B, 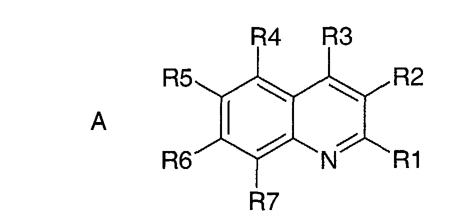 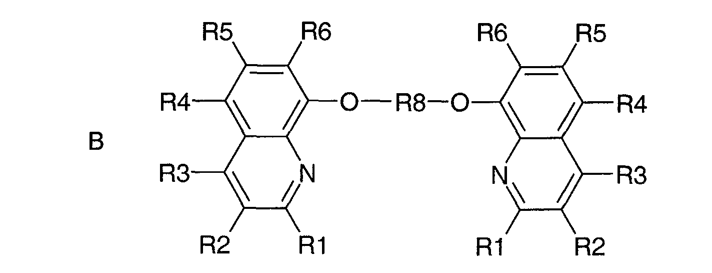 wobei R1, R2, R3, R4, R5, R6 je unabhängig voneinander H, Methyl, Ethyl, Propyl, Isopropyl, n-Butyl, Isobutyl, tert.-Butyl, C₅- bis C₁₂-Alkyl, COOH, COOR' oder Halogen bedeuten. R7 stellt H, Methyl, Ethyl, C₃- bis C₁₂-Alkyl, OH oder OR" dar und R8 bedeutet Alkylen oder Alkylenether. Schliesslich stellen R' einen Alkylrest und R" einen Alkylrest oder einen Alkylrest mit Heteroatomen dar.

In der Formel A als R7 bevorzugt ist Methyl, Ethyl, C₃- bis C₈-Alkyl oder O-(CH₂CH₂O)ₓ-R' oder O-(CH₂CH(CH₃)O)ₓ-R' oder Stellungsisomere davon, mit den Werten für x von 1 - 6, oder OH. Besonders bevorzugt als R7 ist OH.

In der Formel B als R8 bevorzugt ist C₁- bis C₈-Alkylen oder (CH₂CH₂O)_{y}CH₂CH₂ oder (CH₂CH(CH₃)O)_{y}CH₂CH(CH₃) oder Stellungsisomere davon, mit den Werten für y von 0 - 5. Besonders bevorzugt sind hierbei Werte von y = 2 oder 3.

In den beiden Formeln A oder B sind als Substituenten R1, R2, R3, R4, R5, R6 unabhängig voneinander H oder Methyl bevorzugt. Besonders bevorzugt ist H.

Als Bismut-Verbindung kann eine Vielzahl von herkömmlichen Bismut-Katalysatoren verwendet werden. Dabei handelt es sich beispielsweise um Bismutcarboxylate wie z.B. Acetat, Oleat, Octoat oder Neodecanoat, Bismutnitrat, Bismuthalogenide wie z.B. Bromid, Chlorid, Iodid, Bismutsulfid, basische Bismutcarboxylate wie z.B. Bismutyl-neodecanoat, Bismut-subgallat oder Bismut-subsalicylat, sowie Gemische davon. Vorzugsweise eingesetzt werden Bismutcarboxylate, insbesondere die Tricarboxylate Bi(OOC-R"')₃, wobei R"' ein C₅- bis C₁₇-Alkylrest, insbesondere C₅- bis C₁₁-Alkylrest, bevorzugt C₇- oder C₉-Alkylrest bedeutet. Die Bismutcarboxylate sind nach bekannten Verfahren ausgehend z.B. von Bismutoxid herstellbar.

Die Bismutverbindung kann als Pulver, als Flüssigkeit oder als Lösung eingesetzt werden.

Das Katalysatorsystem wird hergestellt, indem die Bismutverbindung und die aromatische Stickstoffverbindung miteinander vermengt werden. Die Vermengung kann entweder in einem inerten Medium wie einem Weichmacher oder einem Lösemittel stattfinden, oder sie kann in direkt in der Polyurethanzusammensetzung erfolgen.

In einer bevorzugten Ausführungsform wird das Katalysatorsystem vor der Zugabe zur Polyurethanzusammensetzung in einem inerten Medium wie z.B. einem Weichmacher oder einem Lösemittel hergestellt, indem beispielsweise die Bismutverbindung und die aromatische Stickstoffverbindung, jeweils gelöst z.B. in einem Weichmacher oder einem Lösemittel, miteinander vermengt und gut gemischt werden. Es ist besonders vorteilhaft, die Mischung kurzzeitig zu erwärmen, beispielsweise während einer Stunde bei 50 bis 120°C.

Es ist generell darauf zu achten, dass bei der Vermengung der aromatischen Stickstoffverbindung und der Bismutverbindung die Komponenten gut vermischt werden. Ein spezielles Augenmerk muss auch auf die Methode der Dosierung von Bismutverbindung und aromatischer Stickstoffverbindung gerichtet werden.

Das beschriebene Katalysatorsystem kann Koordinationsverbindungen (Komplexe) enthalten, in denen die aromatische Stickstoffverbindung als Ligand koordinativ an das Bismutatom gebunden ist. Auf eine solche Komplexbildung kann anhand eines Farbwechsels, hier meist eine intensive Gelbfärbung, die bei der Vermischung der Bismutverbindung mit der aromatischen Stickstoffverbindung auftreten kann, geschlossen werden. Solche Farbwechsel sind dem Fachmann bekannt und gelten als wesentliches Indiz für eine Komplexbildung.

Die Dosierung des Katalysatorsystems ist stark abhängig von den gewünschten Eigenschaften. Insbesondere sind hierbei einerseits die Menge der für das Katalysatorsystem eingesetzten aromatischen Stickstoffverbindung in Bezug auf die Bismutverbindung und andererseits die Konzentration des Katalysatorsystems in der Polyurethanzusammensetzung zu berücksichtigen.

In Bezug auf das Verhältnis der aromatischen Stickstoffverbindung zu Bismut ist der aus der Koordinationslehre (Komplexchemie) bekannte Begriff der "Zähnigkeit" zu berücksichtigen. Bestimmte funktionelle Gruppen eines Liganden bilden mit einem Metallatom oder -ion eine koordinative Bindung (Komplexbindung). Beispielsweise kann ein aromatisches Stickstoffatom eine solche funktionelle Gruppe sein. Es ist deshalb möglich, dass in einem Liganden zwei oder mehrere solcher gleicher oder unterschiedlicher funktioneller Gruppen vorhanden sind, die sich koordinativ an das Metallatom binden können. Liganden werden deshalb als "monodentat" (Zähnigkeit = 1), "bidentat" (Zähnigkeit = 2), "tridentat" (Zähnigkeit = 3), "tetradentat" (Zähnigkeit = 4), "polydentat" (vielzähnig) und so weiter bezeichnet, je nach der Anzahl ihrer funktionellen Gruppen, die für eine koordinative Bindung mit einem speziellen Metallatom geeignet sind. So sind im vorliegenden Fall mit Bismut als Metallatom Verbindungen der Formel A als monodentat zu betrachten, ausser in den Fällen, wo R7 OH oder OR" darstellen und sie damit bidentat sind, während Verbindungen der Formel B als tetradentat zu betrachten sind.

Die beschriebenen Polyurethanzusammensetzungen weisen einerseits, in Abwesenheit von Wasser, eine sehr gute Lagerstabilität auf und verfügen andererseits nach ihrer Applikation über eine hohe Frühfestigkeit und härten schnell und vollständig aus.

Zur Erzielung einer schnellen Aushärtung und gleichzeitig einer guten Lagerstabilität der Polyurethanzusammensetzungen hat sich gezeigt, dass die besten Ergebnisse erzielt werden, wenn das Mol-Verhältnis von (aromatischer Stickstoffverbindung multipliziert mit deren Zähnigkeit) zu Bismut im Bereich von 0.2:1 bis 12:1 gewählt wird. Ein kleines Verhältnis, im Bereich von etwa 0.2:1 bis 6:1, ist hierbei zu bevorzugen, da damit bereits eine deutliche Stabilisierung der Zusammensetzung erreicht wird und gleichzeitig die katalytische Aktivität der Bismutverbindung im Wesentlichen erhalten bleibt. (Unter der "katalytischen Aktivität" einer Bismutverbindung bzw. eines Bismutkatalysators wird hier und im ganzen Dokument die katalytische Wirkung der Bismutverbindung bezeichnet, die bezogen auf ihren Bismutgehalt (in Gewichts-%) auf die Reaktion von Isocyanatgruppen ausgeht.) Hierbei kann das Katalysatorsystem in Mengen von 0.001 bis 1.0 Gewichts-% Bismut, bevorzugt 0.01 bis 0.5 Gewichts-% Bismut, bezogen auf das Gewicht der gesamten Polyurethanzusammensetzung, dosiert sein.

Wenn das Verhältnis mehr als 6:1 beträgt, was, bei Annahme einer Koordinationszahl von 6 für Bismut (oktaedrische Koordination), einem Ligandüberschuss entspricht, verbessert sich die Stabilisierung nur noch unwesentlich, während die katalytische Aktivität zunehmend abnimmt.

Es ist allerdings anzumerken, dass die erwähnte Abnahme der katalytischen Aktivität, die durch die Modifizierung der eingesetzten Bismutverbindung durch die aromatische Stickstoffverbindung entsteht, sich nur auf die Geschwindigkeit der Härtungsreaktion kurz nach der Applikation auswirkt. Die Abnahme lässt sich möglicherweise darauf zurückführen, dass die modifizierte Bismutverbindung durch Wasser zuerst aktiviert werden muss und deshalb anfänglich inaktiv bleibt und erst mit der Zeit voll katalytisch wirksam wird (sogenannter "delay" oder "time-lapse"-Effekt; bei zweikomponentigen Zusammensetzungen hat dieser Effekt eine Erhöhung der Topfzeit zur Folge). Nach Verstreichen dieser Aktivierungsperiode weist die modifizierte Bismutverbindung die gleiche katalytische Aktivität auf wie die unmodifizierte Verbindung und führt dann zu raschem Festigkeitsaufbau und zur schnellen Aushärtung der Polyurethanzusammensetzung. Die anfänglich geringfügig verminderte katalytische Aktivität, wie sie für das beschriebene Katalysatorsystem beobachtet wird, hat aus den erwähnten Gründen keine nachteiligen Auswirkungen auf die Eigenschaften der erfindungsgemässen Polyurethanzusammensetzung, sondern kann im Gegenteil sogar erwünscht sein, da die Zeitspanne der Verarbeitbarkeit der Zusammensetzung nach der Applikation (die sogenannte Offenzeit) durch die zu Beginn nur langsam ansteigende Viskosität noch erhöht wird.

Die beschriebenen Polyurethanzusammensetzungen können auch andere in der Polyurethanchemie geläufige metallorganische Katalysatoren als Ko-Katalysatoren enthalten. Besonders vorteilhaft ist eine Kombination des erfindungsgemässen Katalysatorsystems mit Zinnverbindungen, wie beispielsweise Zinn(II)-octoat, Dibutylzinndilaurat oder Dibutylzinndiacetat, da die katalytische Aktivität einer solchen Mischung in der Polyurethanzusammensetzung höher ist als die des erfindungsgemässen Katalysatorsystems allein. Des weiteren können auch noch andere, in der Polyurethanchemie geläufige Katalysatoren als Ko-Katalysatoren eingesetzt werden, beispielsweise tertiäre Amine wie z.B. DABCO (= 1,4-Diazabicyclo[2.2.2]octan) oder 2,2'-Dimorpholinodiethylether. Eine Beimischung solcher Katalysatoren kann für gewisse Anwendungen von Polyurethanzusammensetzungen vorteilhaft sein.

Als zusätzliche Komponenten in den beschriebenen Polyurethanzusammensetzungen können unter anderem folgende, in der Polyurethanindustrie wohlbekannte Hilfs- und Zusatzmittel vorhanden sein:
Weichmacher, beispielsweise Ester organischer Carbonsäuren oder deren Anhydride, Phthalate, wie beispielsweise Dioctylphthalat oder Diisodecylphthalat, Adipate, wie zum Beispiel Dioctyladipat, Sebacate, organische Phosphor- und Sulfonsäureester, Polybutene und andere, mit Isocyanaten nicht reagierende Verbindungen; Lösemittel; anorganische und organische Füllstoffe, wie zum Beispiel gemahlene oder gefällte Calciumcarbonate, welche gegebenenfalls mit Stearaten beschichtet sind, Russe, Kaoline, Aluminiumoxide, Kieselsäuren und PVC-Pulver; Fasern, beispielsweise aus Polyethylen; Pigmente; Rheologie-Modifizierer wie beispielsweise Verdickungsmittel, zum Beispiel Harnstoffverbindungen, Polyamidwachse, Bentonite oder pyrogene Kieselsäuren; Haftvermittler, insbesondere Silane wie Epoxysilane, Vinylsilane, Isocyanatosilane und mit Aldehyden zu Aldiminosilanen umgesetzte Aminosilane; Trocknungsmittel wie beispielsweise p-Tosylisocyanat und andere reaktive Isocyanate, Orthoameisensäureester, Calciumoxid oder Molekularsiebe; Stabilisatoren gegen Wärme, Licht- und UV-Strahlung; flammhemmende Substanzen; oberflächenaktive Substanzen wie beispielsweise Netzmittel, Verlaufsmittel, Entlüftungsmittel oder Entschäumer; Fungizide oder das Pilzwachstum hemmende Substanzen; sowie weitere, in der Polyurethanindustrie üblicherweise eingesetzte Substanzen.

Die beschriebenen Polyurethanzusammensetzungen werden hergestellt und aufbewahrt unter Ausschluss von Feuchtigkeit. Die Zusammensetzungen sind lagerstabil, d.h. sie können in einer geeigneten Verpackung oder Anordnung, wie beispielsweise in einem Fass, einem Beutel oder einer Kartusche, vor ihrer Anwendung während mehreren Monaten bis zu einem Jahr und länger aufbewahrt werden, ohne dass sie ihre Anwendbarkeit verlieren. Bei der Applikation kommen die Polyurethanzusammensetzungen in Kontakt mit Feuchtigkeit, worauf die Isocyanatgruppen mit Wasser reagieren und das Polymer dadurch aushärten. Entweder kann das zur Aushärtung benötigte Wasser aus der Luft stammen (Luftfeuchtigkeit), oder die Polyurethanzusammensetzung kann mit einer Wasser enthaltenden Komponente in Kontakt gebracht werden, zum Beispiel durch Bestreichen, beispielsweise mit einem Abglättmittel, durch Besprühen oder mittels Eintauchverfahren, oder es kann der Polyurethanzusammensetzung eine Wasser enthaltende Komponente zugesetzt werden, zum Beispiel in Form einer wasserhaltigen Paste, die beispielsweise über einen Statikmischer eingemischt wird.

Die beschriebene Polyurethanzusammensetzung ist geeignet als Dichtstoff aller Art, beispielsweise zum Abdichten von Fugen im Bau, als Klebstoff für das Verkleben von diversen Substraten, beispielsweise zum Verkleben von Bauteilen bei der Herstellung von Automobilen, Schienenfahrzeugen, Schiffen oder anderen industriellen Gütern, sowie als Beschichtung oder Belag für diverse Artikel beziehungsweise variable Untergründe. Als Beschichtungen bevorzugt sind Schutzanstriche, Versiegelungen, Schutzbeschichtungen und Primer.. Unter den Belägen sind besonders Bodenbeläge als bevorzugt zu nennen. Solche Beläge werden hergestellt, indem typischerweise eine reaktive Zusammensetzung auf den Untergrund gegossen und egalisiert wird, wo sie zu einem Bodenbelag aushärtet. Beispielsweise werden solche Bodenbeläge für Büros, Wohnbereiche, Spitäler, Schulen, Lagerhallen, Parkgaragen und andere private oder industrielle Anwendungen verwendet.

Als besonders bevorzugt findet die erfindungsgemässe Zusammensetzung Anwendung als Klebstoff oder als Primer.

Die Polyurethanzusammensetzung wird mit der Oberfläche eines beliebigen Untergrundes zumindest partiell kontaktiert. Bevorzugt ist eine gleichmässige Kontaktierung in Form eines Dicht- oder Klebstoffes, einer Beschichtung oder eines Belages, und zwar in den Bereichen, welche für den Einsatz eine Verbindung in Form einer Verklebung oder Dichtung benötigen oder aber deren Untergrund abgedeckt sein soll. Es kann durchaus nötig sein, dass der Untergrund bzw. der zu kontaktierende Artikel im Vorfeld des Kontaktierens einer physikalischen und / oder chemischen Vorbehandlung unterzogen werden muss, beispielsweise durch Schleifen, Sandstrahlen, Bürsten oder dergleichen, oder durch Behandeln mit Reinigern, Lösemitteln, Haftvermittlern, Haftvermittlerlösungen oder Primern, oder dem Aufbringen einer Haftbrücke oder eines Sealers. Nach dem Kontaktieren erfolgt, wie bereits erwähnt, eine Aushärtung unter dem Einfluss von Wasser.

Es hat sich gezeigt, dass die Polyurethanzusammensetzung gemäss Anspruch 1 besonders gut geeignet ist als Klebstoff oder Primer auf lackierten Oberflächen, insbesondere bei Verwendung von Automobillacken, insbesondere bei mehrfach eingebrannten Automobillacken.

Weiterhin beansprucht wird ein Katalysator für Polyurethanzusammensetzungen, welcher eine Koordinationsverbindung (Komplex) zwischen Bismut und einer aromatischen Stickstoffverbindung der Formel A oder B ist, 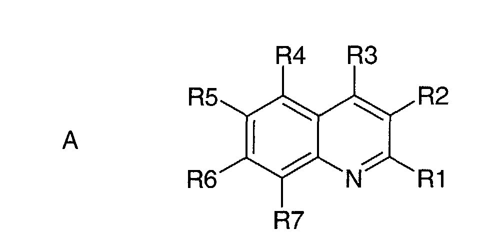 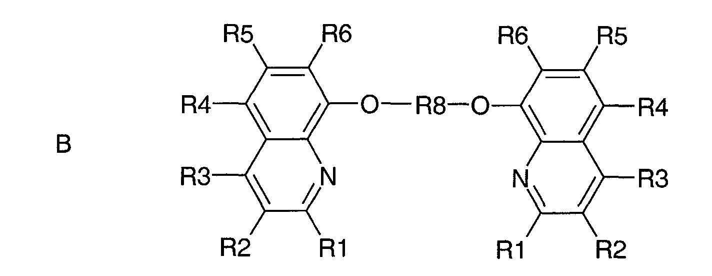 wobei R1, R2, R3, R4, R5, R6 je unabhängig voneinander H, Methyl, Ethyl, Propyl, Isopropyl, n-Butyl, Isobutyl, tert.-Butyl, C₅- bis C₁₂-Alkyl, COOH, COOR' oder Halogen bedeuten. R7 stellt H, Methyl, Ethyl, C₃- bis C₁₂-Alkyl, OH oder OR" dar und R8 bedeutet Alkylen oder Alkylenether. Schliesslich stellen R' einen Alkylrest und R" einen Alkylrest oder einen Alkylrest mit Heteroatomen dar.

In der Formel A als R7 bevorzugt ist C₁- bis C₈-Alkyl oder O-(CH₂CH₂O)ₓ-R' oder O-(CH₂CH(CH₃)O)ₓ-R' oder Stellungsisomere davon, mit den Werten für x von 1 - 6, oder OH. Besonders bevorzugt als R7 ist OH.

In der Formel B als R8 bevorzugt ist C₁- bis C₈-Alkylen oder (CH₂CH₂O)_{y}CH₂CH₂ oder (CH₂CH(CH₃)O)_{y}CH₂CH(CH₃) oder Stellungsisomere davon, mit den Werten für y von 0 - 5. Besonders bevorzugt sind hierbei Werte von y = 2 oder 3.

In den beiden Formeln A oder B sind als Substituenten R1, R2, R3, R4, R5, R6 unabhängig voneinander H oder Methyl bevorzugt. Besonders bevorzugt ist H.

Als besonders geeignet als Katalysator hat sich eine Koordinationsverbindung zwischen Bismut und 8-Hydroxychinolin oder zwischen Bismut und Tetraethylenglykol-bis-(8-chinolyl)-ether erwiesen.

Überraschenderweise hat sich gezeigt, dass der oben beschriebene Katalysator vorteilhaft für die Herstellung von Polyurethanprepolymeren eingesetzt werden kann. Hierbei wird die Reaktion von mindestens einem Polyisocyanat mit mindestens einem Polyol in Gegenwart von mindestens einem oben beschriebenen Katalysator markant beschleunigt, ohne dass dies jedoch zu vermehrten Problemen mit der Lagerstabilität der Prepolymere führt. Dies führt deshalb einerseits zu kürzeren Herstellzeiten eines Polyurethanprepolymeren und andererseits kann dieses Polyurethanprepolymer, und die damit formulierten Produkte länger gelagert werden, ohne dass die Viskosität wesentlich ansteigt.

### Beispiele

### Beispiele 1 - 9 und Vergleichsbeispiele 10 - 26

Bismut-tris(neodecanoat) in Neodecansäure (NeoBi 200, Shepherd Chemicals; Bismut-Gehalt 20.0 Gew.-%) und eine Verbindung L der Zähnigkeit Z im angegebenen molaren Verhältnis L×Z / Bi gemäss Tabellen 1 und 2 wurden in einem Glaskolben vorgelegt und mit Diisodecylphthalat auf einen Gesamtgehalt von formal 2.0 Gew.-% Bismut verdünnt. Die Mischungen wurden unter trockenen Stickstoff gestellt und unter kräftigem Rühren während einer Stunde auf 100 °C erwärmt. Die dabei erhaltenen Katalysator-Lösungen oder -Suspensionen wurden nach dem Erkalten in ein isocyanatterminiertes Polyurethanprepolymer eingemischt, und zwar in einer Menge von 3.0 Gew.-% (d.h. formal 0.06 Gew.-% Bismut) bezogen auf 100 Gew.-% Prepolymer. Das hierbei verwendete Prepolymer wurde wie folgt hergestellt:

259 g Polyol Acclaim® 4200 N (Bayer), 517 g Polyol Caradol® MD34-02 (Shell) und 124 g 4,4'-Methylendiphenyldiisocyanat (MDI; Desmodur® 44 MC L, Bayer) wurden nach bekanntem Verfahren bei 80 °C zu einem NCO-terminierten Prepolymeren umgesetzt. Das Reaktionsprodukt hatte einen titrimetrisch bestimmten Gehalt an freien Isocyanat-Gruppen von 2.35 Gew.-% und eine Viskosität bei 20 °C von 84 Pa·s.

Nach dem Mischen wurde die Zusammensetzung unverzüglich in innenlackierte Aluminium-Tuben eingefüllt, diese dicht verschlossen und im Ofen bei 60 °C gelagert.

Die Prüfung der Mischung erfolgte zuerst nach einem Tag und erneut nach 7 Tagen. Hierbei wurde jeweils die Hautbildungszeit und die Viskosität bestimmt.

Die Hautbildungszeit wurde bestimmt, indem die raumtemperaturwarme Zusammensetzung bei 23 °C und ca. 50% relativer Luftfeuchtigkeit in einer Schichtdicke von 3 mm auf Pappkarton aufgetragen und dann die Zeit bestimmt wurde, die es dauerte, bis die Zusammensetzung beim leichten Antippen ihrer Oberfläche mittels einer Pipette aus LDPE keine Polymerrückstände auf der Pipette mehr zurückliess.

Die Viskosität wurde bei 20 °C auf einem Kegel-Platten-Viskosimeter der Firma Physica gemessen. Der minimale Abstand zwischen Kegel und Platte betrug 0.05 mm; gemessen wurde bei einer konstanten Schergeschwindigkeit von 30 s⁻¹. Die Veränderung der Viskosität ist ein Mass für die Lagerstabilität einer Polyurethanzusammensetzung.

Die Ergebnisse der vorgenommenen Prüfungen sind in den Tabellen 1 und 2 aufgeführt.

Diese Ergebnisse zeigen, dass die erfindungsgemässen Zusammensetzungen der Beispiele 1 bis 9 (enthaltend jeweils ein erfindungsgemässes Bismut-Katalysatorsystem) (Tabelle 1) gegenüber dem Vergleichsbeispiel 10 (enthaltend ausschliesslich Bismutcarboxylat als Katalysator) (Tabelle 2) allesamt eine bessere Lagerstabilität aufweisen und, je nach verwendeter aromatischer Verbindung L, eine kürzere bis schwach höhere Hautbildungszeit besitzen. Die an sich unerwünschte Erhöhung liegt mit einem Maximalwert von +8% aber durchaus noch im Rahmen des Tolerierbaren.

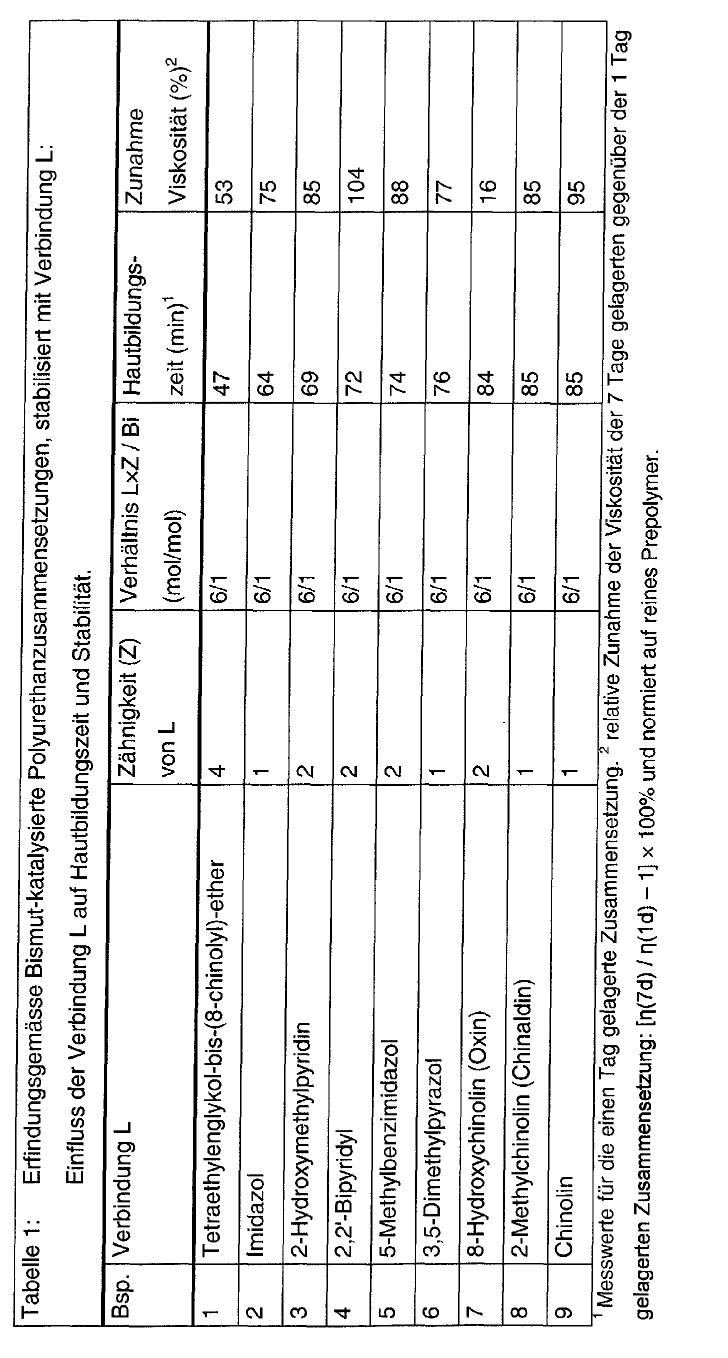

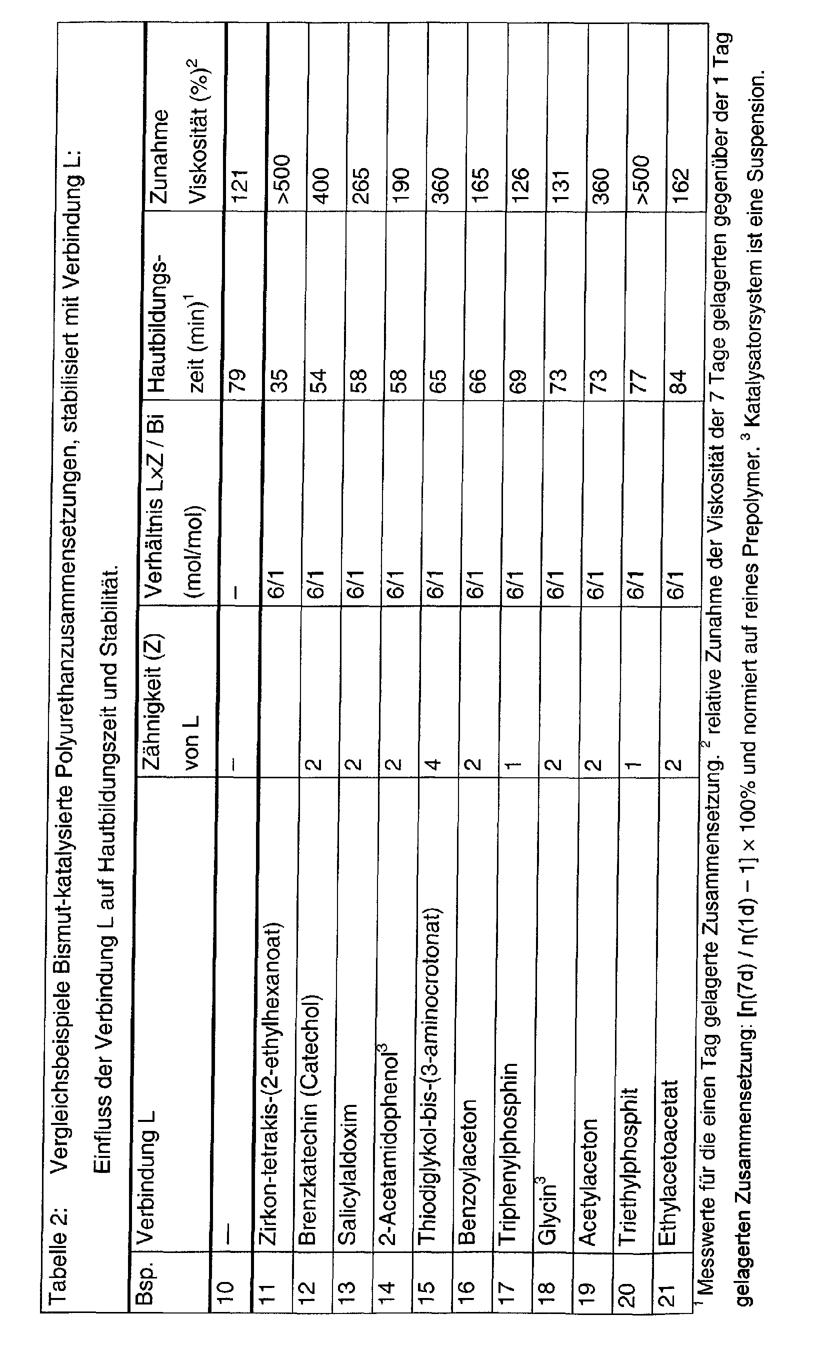

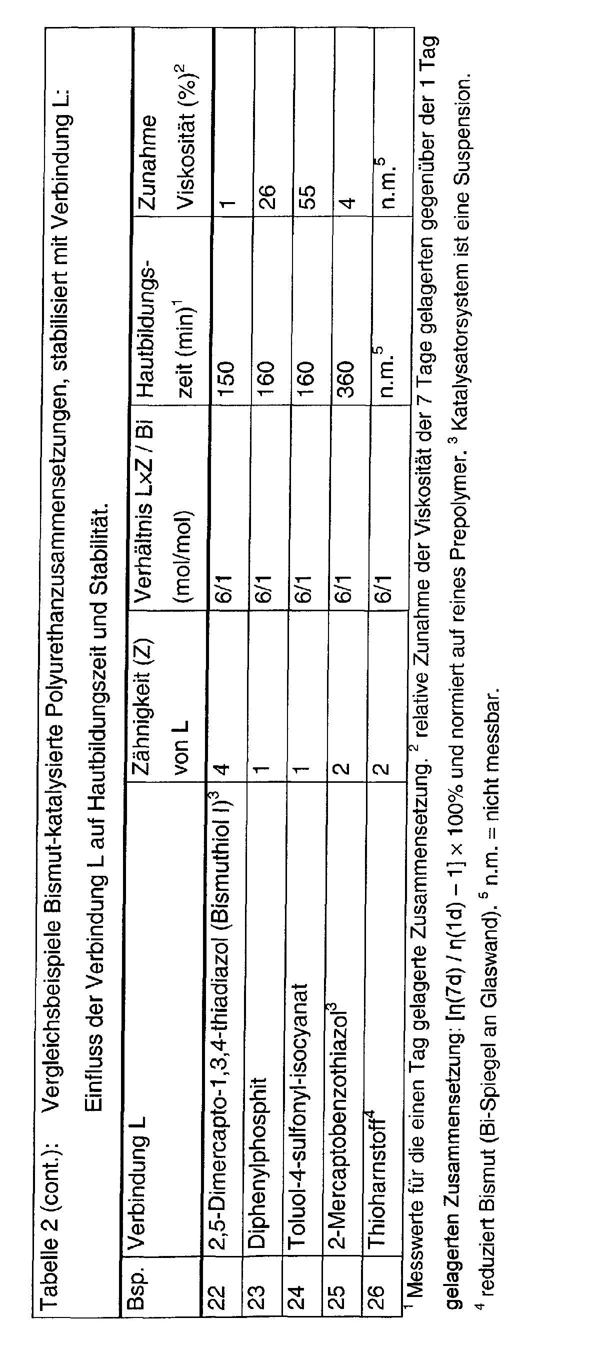

Die Vergleichsbeispiele 11 bis 26 (enthaltend nicht erfindungsgemässe Bismut-Katalysatorsysteme) (Tabelle 2) bringen gegenüber dem Vergleichsbeispiel 10 (enthaltend ausschliesslich Bismutcarboxylat als Katalysator) hingegen allesamt keine Verbesserung oder schneiden gar deutlich schlechter ab als jenes. So zeigen die Zusammensetzungen der Vergleichsbeispiele 11 bis 21 wohl akzeptable Hautbildungszeiten, sind aber in der Lagerstabilität nicht besser oder gar deutlich schlechter als Vergleichsbeispiel 10. Umgekehrt sind die Vergleichsbeispiele 22 bis 26 gegenüber Vergleichsbeispiel 10 wohl lagerstabiler, besitzen aber alle eine höhere Hautbildungszeit, wobei die Erhöhung mit Werten von +90 bis +356% deutlich ausserhalb des Tolerierbaren liegt. Die Reaktivität dieser Zusammensetzungen unterscheidet sich damit nur noch geringfügig von jener der unkatalysierten Zusammensetzung.

### Beispiele 27 - 35

Bismut-tris(neodecanoat) in Neodecansäure (NeoBi 200, Shepherd Chemicals; Bismut-Gehalt 20.0 Gew.-%) und eine Verbindung L der Zähnigkeit Z im angegebenen molaren Verhältnis L×Z / Bi gemäss Tabelle 3 wurden in einem Glaskolben vorgelegt und mit Diisodecylphthalat auf einen Gesamtgehalt von formal 2.0 Gew.-% Bismut verdünnt. Die Mischung wurde unter trockenen Stickstoff gestellt und unter kräftigem Rühren während einer Stunde auf 100 °C erwärmt. Die dabei erhaltene Katalysator-Lösung wurde nach dem Erkalten in das unter Beispiel 1 beschriebene isocyanatterminierte Polyurethanprepolymer eingemischt, und zwar in einer Menge von 3.0 Gew.-% (d.h. formal 0.06 Gew.-% Bismut) bezogen auf 100 Gew.-% Prepolymer, und die Mischungen wie bei Beispiel 1 beschrieben gelagert und geprüft. Die Ergebnisse der vorgenommenen Prüfungen sind in Tabelle 3 aufgeführt.

Die Ergebnisse in Tabelle 3 zeigen, dass die erfindungsgemässen Zusammensetzungen der Beispiele 7 und 27 bis 35 (enthaltend jeweils ein erfindungsgemässes Bismut-Katalysatorsystem) gegenüber dem Vergleichsbeispiel 10 (enthaltend ausschliesslich Bismutcarboxylat als Katalysator) allesamt, d.h. über den ganzen Bereich des Verhältnisses zwischen Verbindung L der Zähnigkeit Z und Bismut (L×Z / Bi, mol / mol), eine bessere Lagerstabilität aufweisen. Je nach dem eingesetzten Verhältnis ist der Stabilisierungseffekt mehr oder weniger ausgeprägt: Je höher das Verhältnis gewählt wird, desto stabiler ist die Zusammensetzung. Umgekehrt erhöht sich bei einem höheren Verhältnis auch die Hautbildungszeit. Die Erhöhung ist aber auch beim höchsten gewählten Verhältnis in Beispiel 35 noch tolerierbar (+16%). Das gesamthaft beste Eigenschaftsbild (hohe Stabilität, tiefe Hautbildungszeit) ergibt sich für Verhältnisse L×Z / Bi im mittleren (6/1) bis unteren (0.2/1) Bereich.

**Tabelle 3:**

| Bismut-katalysierte Polyurethanzusammensetzungen, stabilisiert mit Verbindung L: Einfluss des Verhältnisses L×Z / Bi auf Hautbildungszeit und Stabilität. | | | | |
|---|---|---|---|---|
| Bsp. | Verbindung L (Z = 2) | Verhältnis L×Z / Bi (mol/mol) | Hautbildungszeit (min)⁶ | Zunahme Viskosität (%)⁷ |
| 10 | ― | 0 / 1 | 79 | 121 |
| 27 | 8-Hydroxychinolin | 0.2 / 1 | 80 | 80 |
| 28 | 8-Hydroxychinolin | 0.5 / 1 | 80 | 67 |
| 29 | 8-Hydroxychinolin | 1.0 / 1 | 80 | 50 |
| 30 | 8-Hydroxychinolin | 1.5/1 | 81 | 44 |
| 31 | 8-Hydroxychinolin | 2 / 1 | 82 | 37 |
| 32 | 8-Hydroxychinolin | 4 / 1 | 83 | 19 |
| 7 | 8-Hydroxychinolin | 6 / 1 | 84 | 16 |
| 33 | 8-Hydroxychinolin | 8 / 1 | 87 | 16 |
| 34 | 8-Hydroxychinolin | 10 / 1 | 92 | 13 |
| 35 | 8-Hydroxychinolin | 12 / 1 | 92 | 13 |

| | | | | |
|---|---|---|---|---|
| ⁶ Messwerte für die einen Tag gelagerte Zusammensetzung. | | | | |
| ⁷ relative Zunahme der Viskosität der 7 Tage gelagerten gegenüber der 1 Tag gelagerten Zusammensetzung: [η(7d) / η(1d) - 1] × 100% und normiert auf reines Prepolymer. | | | | |

### Beispiele 36 - 38 und Vergleichsbeispiel 39

3 Gewichtsteile Bismut-tris(neodecanoat) in Neodecansäure (NeoBi 200, Shepherd Chemicals; Bismut-Gehalt 20.0 Gew.-%) und 1 Gewichtsteil Dibutylzinndilaurat (DBTDL; Metatin® Katalysator 712, Acima / Rohm & Haas; Zinn-Gehalt 18.5 Gew.-%) wurden mit einer Verbindung L der Zähnigkeit Z im angegebenen molaren Verhältnis L×Z / (Bi+Sn) gemäss Tabelle 4 in einem Glaskolben vorgelegt und mit Diisodecylphthalat auf einen Gesamtgehalt von formal 1.0 Gew.-% Bismut (bzw. 0.31 Gew.-% Zinn) verdünnt. Die Mischungen wurden unter trockenen Stickstoff gestellt und unter kräftigem Rühren während einer Stunde auf 100 °C erwärmt. Die dabei erhaltenen Katalysator-Lösungen wurden nach dem Erkalten in das unter Beispiel 1 beschriebene isocyanatterminierte Polyurethanprepolymer eingemischt, und zwar in einer Menge von 3.0 Gew.-% (d.h. formal 0.03 Gew.-% Bismut bzw. 0.01 Gew.-% Zinn) bezogen auf 100 Gew.-% Prepolymer, und die Mischungen wie bei Beispiel 1 beschrieben gelagert und geprüft. Die Ergebnisse der vorgenommenen Prüfungen sind in Tabelle 4 aufgeführt.

**Tabelle 4:**

| Bismut-/Zinn-katalysierte Polyurethanzusammensetzungen, stabilisiert mit Verbindung L: Einfluss des Zinn-Ko-Katalysators. | | | | |
|---|---|---|---|---|
| Bsp. | Verbindung L (Z = 2) | Verhältnis L×Z / (Bi+Sn) (mol/mol) | Hautbildungszeit (min)⁸ | Zunahme Viskosität (%)⁹ |
| 36 | 8-Hydroxychinolin | 6 / 1 | 46 | 14 |
| 37 | 8-Hydroxychinolin | 2 / 1 | 45 | 40 |
| 38 | 8-Hydroxychinolin | 1 / 1 | 42 | 68 |
| 39 | ― | 0 / 1 | 40 | 105 |

| | | | | |
|---|---|---|---|---|
| ⁸ Messwerte für die einen Tag gelagerte Zusammensetzung. | | | | |
| ⁹ relative Zunahme der Viskosität der 7 Tage gelagerten gegenüber der 1 Tag gelagerten Zusammensetzung: [η(7d) / η(1d) - 1] × 100% und normiert auf reines Prepolymer. | | | | |

Aus den Ergebnissen in Tabelle 4 ist ersichtlich, dass die erfindungsgemässen Zusammensetzungen der Beispiele 36 bis 38 (enthaltend jeweils ein erfindungsgemässes Bismut-Katalysatorsystem, kombiniert mit einem Zinn-Ko-Katalysator) sowohl gegenüber den Beispielen 7, 29 und 31 (enthaltend jeweils ein erfindungsgemässes Bismut-Katalysatorsystem ohne Zinn-Ko-Katalysator), als auch gegenüber dem Vergleichsbeispiel 10 (enthaltend ausschliesslich Bismutcarboxylat als Katalysator, ohne Zinn-Ko-Katalysator), jeweils deutlich niedrigere Hautbildungszeiten aufweisen. Die Lagerstabilität der Zusammensetzungen ist dabei etwa gleich gut wie jene der zinnfreien Zusammensetzungen. Das Vergleichsbeispiel 39, welches Zinn und Bismut enthält, jedoch keine aromatische Stickstoffverbindung, weist zwar gegenüber dem Vergleichsbeispiel 10 eine deutlich schnellere Hautbildungszeit auf, besitzt aber eine mangelhafte Lagerstabilität.

Die Beispiele 36 bis 38 zeigen damit, dass sich die erfindungsgemässen Zusammensetzungen bzw. das erfindungsgemässe Bismut-Katalysatorsystem vorteilhaft mit einem Zinn-Katalysator kombinieren lassen.

### Beispiel 40 und Vergleichsbeispiele 41 - 43:

Dieses Beispiel belegt die Herstellung einer erfindungsgemässen Polyurethanzusammensetzung und ihre Verwendung als Klebstoff.

In einem Vakuummischer wurden 1500 g Prepolymer 1, 250 g Prepolymer 2, 1000 g Kaolin, 625 g Russ, 500 g Diisodecylphthalat (DIDP; Palatinol® Z, BASF), 1000 g Harnstoff-Verdickungsmittel, 25 g 3-Glycidoxypropyltrimethoxysilan (Silquest® A-187, OSi Crompton) und 100 g einer der Katalysator-Lösungen 1 bis 4 gemäss Tabelle 5 zu einer knollenfreien, homogenen Paste verarbeitet.

Die Prepolymere 1 und 2 wurden wie folgt hergestellt:
Prepolymer 1: 2155 g Polyol Acclaim® 4200 N (Bayer), 4310 g Polyol Caradol® MD34-02 (Shell) und 1035 g 4,4'-Methylendiphenyldiisocyanat (MDI; Desmodur® 44 MC L, Bayer) wurden nach bekanntem Verfahren bei 80 °C zu einem NCO-terminierten Prepolymeren umgesetzt. Das Reaktionsprodukt hatte einen titrimetrisch bestimmten Gehalt an freien Isocyanat-Gruppen von 2.36 Gew.-%.
Prepolymer 2: 590 g Polyol Acclaim® 4200 N (Bayer), 1180 g Polyol Caradol® MD34-02 (Shell) und 230 g Isophorondiisocyanat (IPDI; Vestanat® IPDI, Degussa) wurden nach bekanntem Verfahren bei 80 °C zu einem NCO-terminierten Prepolymeren umgesetzt. Das Reaktionsprodukt hatte einen titrimetrisch bestimmten Gehalt an freien Isocyanat-Gruppen von 2.12 Gew.-%.

Das Harnstoff-Verdickungsmittel wurde wie folgt hergestellt:
In einem Vakuummischer wurden 1000 g Diisodecylphthalat (DIDP; Palatinol® Z, BASF) und 160 g 4,4'-Methylendiphenyldiisocyanat (MDI; Desmodur® 44 MC L, Bayer) vorgelegt und leicht aufgewärmt. Dann wurden unter starkem Rühren 90 g Monobutylamin langsam zugetropft. Die entstehende Paste wurde unter Vakuum und Kühlung eine Stunde weitergerührt.

Die Katalysator-Lösungen 1 bis 4 wurden wie folgt hergestellt:
Katalysator-Lösung 1: Bismut-tris(neodecanoat) in Neodecansäure (NeoBi 200, Shepherd Chemicals; Bismut-Gehalt 20.0 Gew.-%) und eine Lösung von 8-Hydroxychinolin (Zähnigkeit Z = 2) in Diisodecylphthalat (DIDP) wurden im molaren Verhältnis L×Z / Bi von 1.5 / 1 in einem Glaskolben vorgelegt und mit DIDP auf einen Bismut-Gesamtgehalt von formal 5.85 Gew.-% verdünnt. Die Mischung wurde unter kräftigem Rühren während einer Stunde auf 80 °C erwärmt und dann auf Raumtemperatur abgekühlt.
Katalysator-Lösung 2: Bismut-tris(neodecanoat) in Neodecansäure (NeoBi 200, Shepherd Chemicals; Bismut-Gehalt 20.0 Gew.-%) wurde in einem Glaskolben vorgelegt und mit DIDP auf einen Bismut-Gesamtgehalt von formal 5.85 Gew.-% verdünnt.
Katalysator-Lösung 3: Bismut-tris(neodecanoat) in Neodecansäure (NeoBi 200, Shepherd Chemicals; Bismut-Gehalt 20.0 Gew.-%) und eine Lösung von Toluol-4-sulfonyl-isocyanat (Zähnigkeit Z = 1) in Diisodecylphthalat (DIDP) wurden im molaren Verhältnis L x Z / Bi von 3 / 1 in einem Glaskolben vorgelegt und mit DIDP auf einen Bismut-Gesamtgehalt von formal 5.85 Gew.-% verdünnt.
Katalysator-Lösung 4: 10 g 2,2'-Dimorpholinodiethylether (DMDEE) und 1 g Dibutylzinndilaurat (DBTDL; Metatin® Katalysator 712, Acima / Rohm & Haas; Zinn-Gehalt 18.5 Gew.-%) wurden mit 89 g DIDP vermengt und zu einer homogenen Lösung vermischt.

Die so erhaltenen Klebstoffe wurden unmittelbar nach ihrer Herstellung in Aluminium-Kartuschen mit einem Durchmesser von 45 mm abgefüllt, diese luftdicht verschlossen und im Ofen bei 60 °C gelagert. Nach einem Tag wurden die Klebstoffe auf Auspresskraft, Hautbildungszeit, Frühfestigkeit sowie auf Haftungseigenschaften geprüft. Nach 7 Tagen wurde die Auspresskraft erneut gemessen.

Die Auspresskraft (APK) wurde an jeweils einer frisch geöffneten, raumtemperaturwarmen Kartusche ermittelt, wobei der Klebstoff an der Kartuschenspitze bei Raumtemperatur durch eine Öffnung von 5 mm gepresst wurde. Das Auspressen erfolgte durch eine Zugprüfmaschine mit einer konstanten Geschwindigkeit von 60 mm/min.

Die Hautbildungszeit (HBZ) wurde so wie in Beispiel 1 beschrieben bestimmt.

Die Frühfestigkeit wurde wie folgt bestimmt. Zuerst wurden zwei Glasplättchen 40 x 100 x 6mm auf der zu verklebenden Seite mit Sika® Aktivator (erhältlich bei Sika Schweiz AG) vorbehandelt. Nach einer Ablüftezeit von 10 Minuten wurde der Klebstoff als Dreiecksraupe entlang der Längskante auf einem Glasplättchen appliziert. Nach ca. einer Minute wurde der Klebstoff unter Verwendung des zweiten Glasplättchens mittels einer Zugmaschine (Zwick) auf 4 mm Kleb-Dicke verpresst (entsprechend einer Verklebungsbreite von ca. 1 cm), dann für 90 Minuten bei 23°C und 50% relativer Luftfeuchtigkeit gelagert und anschliessend mit einer Zuggeschwindigkeit von 100 mm/min auseinandergezogen und die maximale Kraft hierfür registriert in N/cm².

Die Ergebnisse der vorgenommenen Prüfungen sind in der Tabelle 5 aufgeführt.

**Tabelle 5:**

| Eigenschaften der Polyurethanzusammensetzungen | | | | | |
|---|---|---|---|---|---|
| Beispiel | Katalysator-Lösung | APK frisch¹⁰ (N) | APK gelagert¹¹ (N) | HBZ¹² (min) | Frühfestigkeit¹³ (N/cm²) |
| 40 | 1 | 632 | 779 | 25 | 20 |
| 41 | 2 | 912 | >2000 | 15 | 21 |
| 42 | 3 | 615 | 643 | 36 | 8 |
| 43 | 4 | 689 | 784 | 17 | 22 |

| | | | | | |
|---|---|---|---|---|---|
| ¹⁰ Auspresskraft nach einem Tag Lagerung bei 60 °C. | | | | | |
| ¹¹ Auspresskraft nach 7 Tagen Lagerung bei 60 °C. | | | | | |
| ¹² Hautbildungszeit. | | | | | |
| ¹³nach 90 Minuten. | | | | | |

Für die Haftungsversuche wurde der Untergrund mit Isopropanol vorgereinigt und nach 30 Sekunden Ablüftezeit der Klebstoff aus der Aluminium-Kartusche als Dreiecksraupe appliziert.

Nach 7 Tagen bei Lagerung bei Raumtemperatur und 50% relativer Luftfeuchtigkeit (in Tabelle 6 als RT angegeben) und weiteren 7 Tagen bei 40 °C und 100% relativer Luftfeuchtigkeit (in Tabelle 6 als KK (Kondenswasserklima) angegeben) wurde die Haftung mittels "Raupentest" getestet. Hierbei wird am Ende knapp über der Klebefläche eingeschnitten. Das eingeschnittene Ende der Raupe wird mit einer Rundzange festgehalten und vom Untergrund gezogen. Dies geschieht durch vorsichtiges Aufrollen der Raupe auf die Zangenspitze, sowie Plazieren eines Schnittes senkrecht zur Raupenziehrichtung bis auf den blanken Untergrund. Die Raupenabziehgeschwindigkeit ist so zu wählen, dass ca. alle 3 Sekunden ein Schnitt gemacht werden muss (Schnittabstand ca. 2 bis 3 mm). Die Teststrecke muss mindestens 8 cm betragen. Die Bewertung der Hafteigenschaften erfolgt anhand des nach dem Abziehen der Raupe auf dem Untergrund zurückbleibenden Klebstoffs (Kohäsionsbruch), und zwar durch Abschätzen der kohäsiven Anteils der Haftfläche, gemäss folgender Skala:
1 = > 95% Kohäsionsbruch
2 = 75 - 95% Kohäsionsbruch
3 = 25 - 75% Kohäsionsbruch
4 = < 25% Kohäsionsbruch
5 = adhäsiver Bruch

Durch den Zusatz "P" wird angegeben, dass der Primer sich vom Untergrund ablöst, und deshalb die Haftung des Primers auf dem Untergrund eine Schwachstelle darstellt. Testresultate mit Kohäsionsbruchwerten von weniger als 75% gelten als ungenügend.

Die Ergebnisse der vorgenommenen Prüfungen sind in der Tabelle 6 aufgeführt.

**Tabelle 6:**

| Haftung der Polyurethanzusammensetzungen auf mit Automobillacken beschichteten Stahlblechen | | | | | |
|---|---|---|---|---|---|
| | | 2K-PUR Klarlack | | Acrylat-Pulverklarlack | |
| Einbrand¹⁴ | Lagerung | 1× | 5× | 1× | 5× |
| Beispiel 40 | RT | 1 | 1 | 1 | 1 |
| | KK | 1 | 1 | 1 | 1 |
| Beispiel 41 | RT | 1 | 1 | 1 | 1 |
| | KK | 1 | 1 | 1 | 1 |
| Beispiel 42 | RT | 1 | 1 | 1 | 1 |
| | KK | 1 | 1 | 1 | 1 |
| Beispiel 43 | RT | 1 | 4 | 4 | 4 |
| | KK | 1 | 4 | 4 | 4 |

| | | | | | |
|---|---|---|---|---|---|
| ¹⁴ Anzahl Einbrandzyklen des Lackes (jeweils 20 min bei135 °C pro Einbrandzyklus). | | | | | |

Die Ergebnisse in Tabelle 5 und Tabelle 6 zeigen, dass die erfindungsgemässe Polyurethanzusammensetzung des Beispiels 40 für eine Anwendung als Klebstoff geeignete Eigenschaften aufweist, nämlich eine ausgezeichnete Lagerstabilität (sichtbar anhand der geringen Differenz zwischen Auspresskraft frisch und Auspresskraft gelagert), eine hohe Frühfestigkeit, sowie gute Haftungseigenschaften auf Automobillacken der neueren Generation, insbesondere auch bei Mehrfacheinbrand. Zudem erlaubt die etwas höhere Hautbildungszeit tendenziell eine längere Verarbeitbarkeit des Klebstoffs nach der Applikation. Die Klebstoff-Zusammensetzungen der Vergleichsbeispiele 41 bis 43 (enthaltend nicht erfindungsgemässe Bismut-Katalysatorsysteme) weisen gegenüber Beispiel 40 allesamt Schwächen auf. Die Zusammensetzung des Vergleichsbeispiels 41 (enthaltend ausschliesslich Bismutcarboxylat als Katalysator) hat wohl eine hohe Frühfestigkeit und besitzt gute Haftungseigenschaften; sie ist aber nicht ausreichend lagerstabil. Die Zusammensetzung des Vergleichsbeispiels 42 (enthaltend ein Katalysatorsystem aus Bismutcarboxylat und Toluol-4-sulfonyl-isocyanat) ist lagerstabil und besitzt gute Haftungseigenschaften; sie härtet aber viel zu langsam aus und weist deshalb eine tiefe Frühfestigkeit auf. Die Zusammensetzung des Vergleichsbeispiels 43 (enthaltend ein tertiäres Amin als Katalysator) schliesslich ist lagerstabil und weist eine hohe Frühfestigkeit auf; ihre Haftungseigenschaften sind hingegen ungenügend.

### Beispiel 44 und Vergleichsbeispiele 45 - 46:

Dieses Beispiel belegt die Herstellung einer erfindungsgemässen Polyurethanzusammensetzung und ihre Verwendung als Primer.

Dem Polyurethanprimer Sika® Primer-209 (kommerziell erhältlich bei Sika Schweiz AG), welcher ein Polyurethanprepolymer enthält, wurde ein Katalysatorsystem gemäss Tabelle 7 zugegeben, dieses unter Stickstoff gut einmischt und die Mischung auf ein mit Isohexan gereinigtes Blech, welches mit einem mehrfach eingebrannten Automobillack beschichtet war, mittels Pinsel appliziert. Nach einer Ablüftezeit von 30 Minuten wurde SikaTack®-Plus HM (kommerziell erhältlich bei Sika Schweiz AG), ein hochmoduliger, feuchtigkeitshärtender Polyurethanklebstoff, welcher auf 80 °C vorgewärmt wurde, mittels Kartusche appliziert. Die Haftung des Klebstoffs wurde nach Lagerung bei Raumtemperatur und 50% relativer Luftfeuchtigkeit geprüft.

Die Lagerstabilität der Beispiele in Tabelle 7 wurde durch den Viskositätsanstieg nach 30 Tagen Lagerung bei Raumtemperatur beziehungsweise 50°C im direkten Vergleich zu Sika® Primer-209 beurteilt.

**Tabelle 7:**

| Haftung der Polyurethanprimer auf mit Automobillacken beschichteten Stahlblechen (2K-PU-Klarlack, bei 150 °C 5× während je 20 Minuten eingebrannt) | | | | |
|---|---|---|---|---|
| Beispiel | Zugegebenes Katalysatorsystem | Haftung | Lagerstabilität | |
| | | | RT | 50°C |
| 44 | 0.5 Gew.-%¹⁵ NeoBi 200¹⁶ und 0.025 Gew.-%¹⁵ 8-Hydroxychinolin | 1 | Gut | Gut |
| 45 | 0.5 Gew.-%¹⁵ NeoBi 200¹⁶ | 1 | Schlecht | Schlecht |
| 46 | ― | 5P-4P | Gut | Gut |

| | | | | |
|---|---|---|---|---|
| ¹⁵ bezogen auf Sika® Primer-209. | | | | |
| ¹⁶ NeoBi 200 = Bismut-tris(neodecanoat) in Neodecansäure (Shepherd Chemicals; Bismut-Gehalt 20.0 Gew.-%). | | | | |

Die Resultate der Tabelle 7 zeigen, dass die erfindungsgemässe Polyurethanzusammensetzung des Beispiels 44 für eine Anwendung als Primer geeignete Eigenschaften aufweist, nämlich sowohl gute Haftung auf Automobillacken, als auch eine gute Lagerstabilität. Die Primer-Zusammensetzungen der Vergleichsbeispiele 45 und 46 weisen gegenüber Beispiel 44 hingegen Schwächen auf: Die Zusammensetzung des Vergleichsbeispiels 45 (Zugabe von Bismutcarboxylat als Katalysator) hat wohl gute Haftungseigenschaften auf Automobillacken, ist aber nicht ausreichend lagerstabil; die Zusammensetzung des Vergleichsbeispiels 46 (keine Katalysatorzugabe) ist zwar lagerstabil, hat aber ungenügende Haftungseigenschaften auf der neuen Generation von Automobillacken.

## Patentansprüche

1. Einkomponentige Polyurethanzusammensetzung umfassend
mindestens ein Polyurethanprepolymer mit Isocyanatendgruppen, hergestellt aus mindestens einem Polyisocyanat mit mindestens einem Polyol;
und
mindestens ein Katalysatorsystem, welches erhältlich ist aus mindestens einer Bismutverbindung und mindestens einer aromatischen Stickstoffverbindung.

2. Einkomponentige Polyurethanzusammensetzung gemäss Anspruch 1, **dadurch gekennzeichnet, dass** die aromatische Stickstoffverbindung die Formel A oder B aufweist, 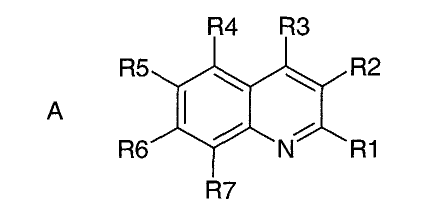 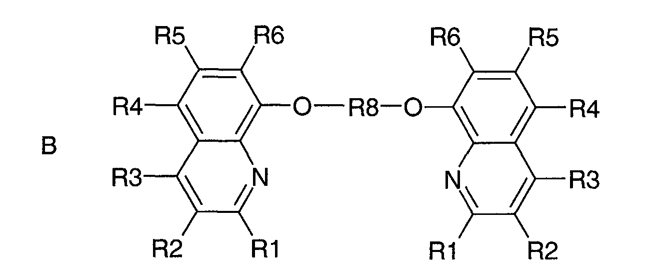 wobei R1, R2, R3, R4, R5, R6 je unabhängig voneinander H, Methyl, Ethyl, Propyl, Isopropyl, n-Butyl, Isobutyl, tert.-Butyl, C₅- bis C₁₂-Alkyl, COOH, COOR' oder Halogen bedeuten, R7 H, Methyl, Ethyl, C₃- bis C₁₂-Alkyl, OH oder OR" bedeuten und R8 Alkylen oder Alkylenether, sowie R' Alkyl und R" Alkyl oder Alkyl mit Heteroatomen bedeuten.

3. Einkomponentige Polyurethanzusammensetzung gemäss Anspruch 2, **dadurch gekennzeichnet, dass** in der aromatischen Stickstoffverbindung der Formel A R7 H, Methyl, Ethyl, C₃- bis C₈-Alkyl oder O-(CH₂CH₂O)ₓ-R' oder O-(CH₂CH(CH₃)O)ₓ-R' oder Stellungsisomere davon, mit den Werten für x von 1 - 6, oder OH, bevorzugt OH bedeutet.

4. Einkomponentige Polyurethanzusammensetzung gemäss Anspruch 2, **dadurch gekennzeichnet, dass** in der aromatischen Stickstoffverbindung der Formel B R8 C₁- bis C₈-Alkylen oder (CH₂CH₂O)_{y}CH₂CH₂ oder (CH₂CH(CH₃)O)_{y}CH₂CH(CH₃) oder Stellungsisomere davon, mit den Werten für y von 0 - 5, insbesondere y = 2 oder 3, bedeutet.

5. Einkomponentige Polyurethanzusammensetzung gemäss einem der Ansprüche 2 bis 4, **dadurch gekennzeichnet, dass** in der aromatischen Stickstoffverbindung der Formel A oder B die Substituenten R1, R2, R3, R4, R5, R6 je unabhängig voneinander H oder Methyl, insbesondere H, sind.

6. Einkomponentige Polyurethanzusammensetzung gemäss einem der vorhergehenden Ansprüche, **dadurch gekennzeichnet, dass** die Bismutverbindung ein Bismutcarboxylat Bi(OOC-R"')₃ ist, wobei R"' ein C₅- bis C₁₇-Alkylrest, insbesondere C₅- bis C₁₁-Alkylrest, bevorzugt C₇oder C₉-Alkylrest bedeutet.

7. Einkomponentige Polyurethanzusammensetzung gemäss einem der vorhergehenden Ansprüche, **dadurch gekennzeichnet, dass** im Katalysator-System das Mol-Verhältnis von (aromatische Stickstoffverbindung multipliziert mit der Zähnigkeit der aromatischen Stickstoffverbindung) zu Bismut 0.2:1 bis 12:1, insbesondere 0.2:1 bis 6:1, beträgt.

8. Einkomponentige Polyurethanzusammensetzung gemäss einem der vorhergehenden Ansprüche, **dadurch gekennzeichnet, dass** die aromatische Stickstoffverbindung mit Bismut eine koordinative Bindung eingeht.

9. Einkomponentige Polyurethanzusammensetzung gemäss einem der vorhergehenden Ansprüche, **dadurch gekennzeichnet, dass** zusätzlich mindestens eine Zinnverbindung vorhanden ist.

10. Einkomponentige Polyurethanzusammensetzung gemäss einem der vorhergehenden Ansprüche, **dadurch gekennzeichnet, dass** die Zusammensetzung feuchtigkeitshärtend ist.

11. Verfahren zur Herstellung der Zusammensetzung gemäss einem der Ansprüche 1 - 10, umfassend zusätzlich einen Schritt der Herstellung des Katalysatorsystems durch Umsetzung einer Bismutverbindung mit mindestens einer aromatischen Stickstoffverbindung.

12. Verwendung der Zusammensetzung gemäss einem der Ansprüche 1 - 10 als Klebstoff, Dichtstoff, Beschichtung oder Belag.

13. Verwendung der Zusammensetzung gemäss einem der Ansprüche 1 - 10 als Primer.

14. Verfahren zum Verkleben, Abdichten oder Beschichten einer Oberfläche, **dadurch gekennzeichnet, dass** es einen Schritt des Kontaktierens mit einer Zusammensetzung gemäss einem der Ansprüche 1 - 10 umfasst.

15. Verfahren gemäss Anspruch 14, **dadurch gekennzeichnet, dass** die Oberfläche ein Lack, vorzugsweise ein Automobillack, insbesondere ein mehrfach eingebrannter Automobillack, ist.

16. Verfahren gemäss Anspruch 14 oder 15, **dadurch gekennzeichnet, dass** es einen zusätzlichen Schritt des Aushärtens an der Luft umfasst.

17. Verfahren gemäss einem der Ansprüche 14 - 16, **dadurch gekennzeichnet, dass** es zusätzlich einen Schritt des Kontaktierens mit einer wasserhaltigen Komponente oder eine Beimischung derselben umfasst.

18. Katalysator für Polyurethanzusammensetzungen, **dadurch gekennzeichnet, dass** der Katalysator eine Koordinationsverbindung zwischen Bismut und einer aromatischen Stickstoffverbindung der Formel A oder B ist, 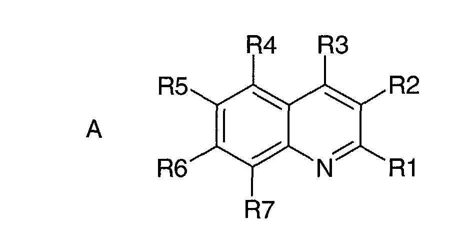 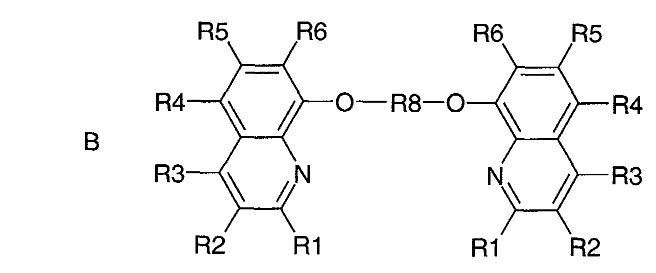 wobei R1, R2, R3, R4, R5, R6 je unabhängig voneinander H, Methyl, Ethyl, Propyl, Isopropyl, n-Butyl, Isobutyl, tert.-Butyl, C₅- bis C₁₂-Alkyl, COOH, COOR' oder Halogen bedeuten, R7 H, Methyl, Ethyl, C₃- bis C₁₂-Alkyl, OH oder OR" bedeuten und R8 Alkylen oder Alkylenether, sowie R' Alkyl und R" Alkyl oder Alkyl mit Heteroatomen bedeuten.

19. Katalysator für Polyurethanzusammensetzungen, **dadurch gekennzeichnet, dass** der Katalysator eine Koordinationsverbindung zwischen Bismut und 8-Hydroxychinolin oder zwischen Bismut und Tetraethylenglykol-bis-(8-chinolyl)-ether ist.

20. Verfahren zur Herstellung eines Polyurethanprepolymers, **dadurch gekennzeichnet, dass** für die Reaktion von mindestens einem Polyisocyanat mit mindestens einem Polyol ein Katalysator gemäss Anspruch 18 oder 19 eingesetzt wird.
